(19) **Europäisches Patentamt / European Patent Office / Office européen des brevets**

(11) **EP 3 742 117 B1**

(12) # EUROPEAN PATENT SPECIFICATION

(45) Date of publication and mention of the grant of the patent:
**26.04.2023 Bulletin 2023/17**

(21) Application number: **19175824.2**

(22) Date of filing: **22.05.2019**

(51) International Patent Classification (IPC):
**G01C 21/20** (2006.01)   **G06F 17/11** (2006.01)
**B63B 79/40** (2020.01)   **G05D 1/02** (2020.01)

(52) Cooperative Patent Classification (CPC):
**G01C 21/203; B63B 79/40; G05D 1/0206; G06F 17/11**

(54) **METHOD AND CONTROL SYSTEM FOR CONTROLLING A MARINE VESSEL**

VERFAHREN UND STEUERUNGSSYSTEM ZUR STEUERUNG EINES WASSERFAHRZEUGS

PROCÉDÉ ET SYSTÈME DE COMMANDE POUR COMMANDER UN NAVIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.11.2020 Bulletin 2020/48**

(73) Proprietor: **ABB Schweiz AG**
**5400 Baden (CH)**

(72) Inventor: **FEYZMAHDAVIAN, Hamid**
**169 73 Stockholm (SE)**

(74) Representative: **Kransell & Wennborg KB**
**P.O. Box 27834**
**115 93 Stockholm (SE)**

(56) References cited:
- Sudakshin Ganesan: "Real Time Reachability Analysis for Marine Vessels", Degree thesis, 2018, pages 1-51, XP055645395, Stockholm, Sweden Retrieved from the Internet: URL:https://pdfs.semanticscholar.org/5c27/499a431e7fa4967ea38a020265b9a5ccc819.pdf [retrieved on 2019-11-21]
- BANSAL SOMIL ET AL: "Hamilton-Jacobi reachability: A brief overview and recent advances", 2017 IEEE 56TH ANNUAL CONFERENCE ON DECISION AND CONTROL (CDC), IEEE, 12 December 2017 (2017-12-12), pages 2242-2253, XP033304146, DOI: 10.1109/CDC.2017.8263977 [retrieved on 2018-01-18]
- RUBIES-ROYO VICENC ET AL: "A Classification-based Approach for Approximate Reachability", 2019 INTERNATIONAL CONFERENCE ON ROBOTICS AND AUTOMATION (ICRA), IEEE, 20 May 2019 (2019-05-20), pages 7697-7704, XP033593866, DOI: 10.1109/ICRA.2019.8793919 [retrieved on 2019-08-09]
- Huahua Wang ET AL: "Randomized Block Coordinate Descent for Online and Stochastic Optimization", Arxiv.org repository, 26 July 2014 (2014-07-26), pages 1-19, XP055650668, Retrieved from the Internet: URL:https://arxiv.org/pdf/1407.0107.pdf [retrieved on 2019-12-09]
- BIANCHI PASCAL ET AL: "A Coordinate Descent Primal-Dual Algorithm and Application to Distributed Asynchronous Optimization", IEEE TRANSACTIONS ON AUTOMATIC CONTROL, IEEE SERVICE CENTER, LOS ALAMITOS, CA, US, vol. 61, no. 10, October 2016 (2016-10), pages 2947-2957, XP011623974, ISSN: 0018-9286, DOI: 10.1109/TAC.2015.2512043 [retrieved on 2016-09-23]
- ALLEN ROSS E ET AL: "A machine learning approach for real-time reachability analysis", 2014 IEEE/RSJ INTERNATIONAL CONFERENCE ON INTELLIGENT ROBOTS AND SYSTEMS, IEEE, 14 September 2014 (2014-09-14), pages 2202-2208, XP032676821, DOI: 10.1109/IROS.2014.6942859 [retrieved on 2014-10-31]

EP 3 742 117 B1

## Description

### TECHNICAL FIELD

The present disclosure generally relates to marine vessels, and in particular to marine vessel control and safety.

### BACKGROUND

When there is a need for both fast computation and safety, the navigation of ships through real environments is a challenging problem for several reasons. First, the ship dynamics is described by a complex nonlinear system whose behaviour can be non-intuitive and difficult to predict. Second, the motion of ships is usually affected by external disturbances such as wind, wave, and current. Lastly, perhaps the most difficult challenge of all is that elements of environment such as obstacle locations and maritime traffic are often unknown a priori.

Reachable set analysis is an appropriate tool that allows for addressing this practical problem by prediction of ship motions and calculation of safe paths through the environment in real-time. A reachable set is the set of states that can be reached by a dynamical system for given sets of initial states, control inputs, and disturbances. The idea of reachability analysis is quite simple: imagine a moving ship and suppose that there is an obstacle in front. Clearly, the captain does not want to collide with the obstacle. The way the captain can avoid hitting the obstacle is to make sure to change the heading and velocity early enough, while considering steering and momentum capabilities of the ships, and any disturbances like wind that might affect steering. Reachability analysis quantifies exactly what it means to make decisions by the captain early enough to be able to avoid obstacles and tells the captain how far away from the unsafe conditions the ship needs to stay.

Reachability analysis is a well-studied field, which has produced several strong theoretical results for specific types of dynamical systems like linear and affine systems and has successfully been applied to many low-dimensional real-world systems. However, almost all previous results suffer from the curse of dimensionality and are computationally intensive for high-dimensional nonlinear systems. That is, they are unable to cope with nonlinear systems having more than four states like marine vessels with at least six states, without large sacrifices in accuracy. Hence, previous results do not appear amenable to real-time implementation for marine vessels.

The following documents are considered relevant prior art: Sudakshin Ganesan, "Real Time Reachability Analysis for Marine Vessels" a degree thesis of 2018; Somil Bansal, Mo Chen, Sylvia Herbert and Claire J. Tomlin, "Hamilton-Jacobi reachability: A brief overview and recent advances" at the 56th Annual Conference on Decision and Control, Melbourne, Australia, December 15th, 2017; and Vicenc Rubies-Royo, David Fridovich-Keil, Sylvia Herbert and Claire J Tomlin, "A Classification-based Approach for Approximate Reachability" at the International Conference on Robotics and Automation, Montreal, Canada, May 20th to 24th, 2019.

### SUMMARY

In view of the above, an object of the present disclosure is to provide a method which solves or at least mitigates existing problems of the state of the art.

The invention is defined in the independent claims. Advantageous features are described in the dependent claims.

There is hence according to a first aspect of the present disclosure provided a method of determining a reachable set of states of a marine vessel, including a position of the marine vessel, that can be obtained by the marine vessel from an initial state $x_0$ at an initial time $t_0$, during a time range from the initial time $t_0$ to a later time $t_1$, wherein the method comprises: a) discretizing a partial differential equation which depends on a model of the marine vessel, the discretizing being performed based on a subdivision of the time range, b) solving a minimisation problem of the discretized partial differential equation to obtain an approximation of a value function of the partial differential equation, and c) determining the reachable set based on the approximation of the value function.

A fast optimization algorithm may thereby be obtained, which accurately calculates the reachable set for marine vessels in real-time. The results produced by the algorithm may allow the captain to predict the position of the vessel up to specific time in advance. In addition, the computed reachable set can give the captain full details of manoeuvring capability of the ship in real-time by considering the physical limitations for force and torque generated by thrusters.

The functions in the discretized partial differential equation may be smooth functions.

The value function may be the viscosity solution of the partial different equation.

According to one embodiment in step b) the solving of the minimisation problem involves finding the minimum of a sum of the discretised partial differential equation and a regularisation term which compensates for an error in the discretisation.

According to one embodiment step b) involves using a splitting method to decompose the minimisation problem into a plurality of sub-problems to obtain the approximation of the value function. The computation time for reachable set calculation may thereby be reduced by many orders of magnitude.

Each sub-problem is a sub-optimisation problem with fewer decision variables.

Any splitting method may be used, for example the Gauss-Seidel method, the Alternate Direction Method of Multipliers (ADMM), and the Douglas-Rachford method.

One embodiment comprises solving each sub-problem using a coordinate descent method such as randomized gradient descent and cyclic coordinate descent methods. Each sub-problem may thereby quickly be solved. The main advantage of using a coordinate descent method is that the computational time of solving each sub-problem is independent of the size of the decision variable.

According to one embodiment step c) involves finding those states of the marine vessel for which the approximation of the value function is smaller than or equal to zero, said states being the reachable set.

According to one embodiment the partial differential equation is a Hamilton-Jacobi-Bellman equation for which the Hamiltonian function is dependent on the model of the marine vessel.

One embodiment comprises displaying the reachable set graphically on a display. The reachable set may hence be shown in two or three dimensions in relation to for example the current position of the marine vessel.

One embodiment comprises controlling the marine vessel based on the reachable set. The controlling of the marine vessel based on the reachable set may be for safe navigation, avoiding collision, path planning, and docking assistant systems.

According to one embodiment the reachable set is used as a constraint for controlling the marine vessel. The reachable set is a dynamic constraint for controlling the marine vessel.

According to one embodiment the model of the marine vessel is based on a control input including yaw torque and total forces in surge and sway directions, disturbances in wind, wave and current, and marine vessel state including position of the marine vessel in a coordinate system, heading angle, surge and sway velocities, and yaw rate.

According to one embodiment the model of the marine vessel is further based on an operational state of a steering system of the marine vessel.

There is according to a second aspect of the present disclosure provided a computer program comprising computer code which when executed by processing circuitry of a marine vessel control system causes the marine vessel control system to perform the steps according to the first aspect.

There is according to a third aspect of the present disclosure provided a marine vessel control system comprising: processing circuitry, and a storage medium comprising computer code which when executed by the processing circuitry causes the marine vessel control system to perform the method according to the first aspect.

There is according to a fourth aspect provided a marine vessel comprising a marine vessel control system according to the third aspect.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc.", unless explicitly stated otherwise.

**BRIEF DESCRIPTION OF THE DRAWINGS**

The specific embodiments of the inventive concept will now be described, by way of example, with reference to the accompanying drawings, in which:

Fig. 1 schematically shows a block diagram of a marine vessel control system;

Fig. 2 shows a flowchart of a method of determining a reachable set of states for a marine vessel; and

Fig. 3 graphically shows an example of a reachable set of positions of a marine vessel.

**DETAILED DESCRIPTION**

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

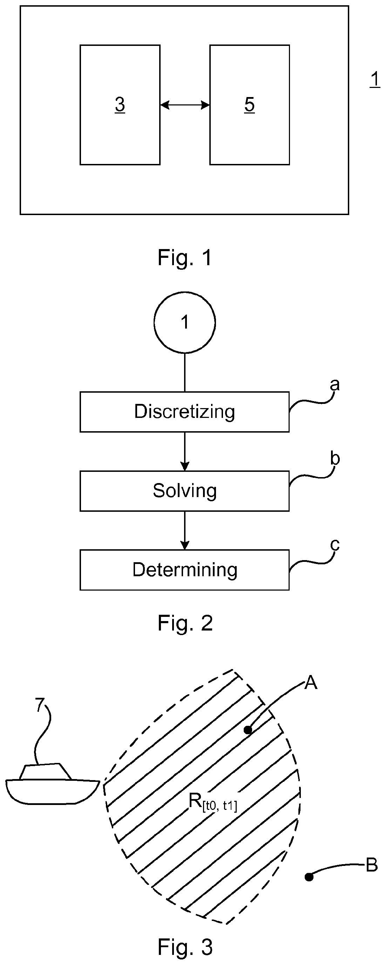

Fig. 1 depicts an example of a marine vessel control system 1. The marine vessel control system 1 may be a Model Predictive Control (MPC) system.

The marine vessel control system 1 comprises processing circuitry 3 and a storage medium 5. The storage medium 5 comprises computer code which when executed by the processing circuitry 3 causes the marine vessel control system 1 to perform the method(s) as disclosed herein.

The storage medium 5 may for example be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory.

The processing circuitry 3 may use any combination of one or more of a suitable central processing unit (CPU), multiprocessor, microcontroller, digital signal processor (DSP), application specific integrated circuit (ASIC), field programmable gate arrays (FPGA) etc., capable of executing any herein disclosed operations concerning reachable set calculation and/or marine vessel control.

The state of the marine vessel is described by a mathematical model of the marine vessel. Each state may for example include the position of the marine vessel, for example in the earth frame, heading angle, surge and sway velocities and the yaw rate. The state may according to one variation include the current state of the propulsion system and the steering system of the marine vessel. In this way their operational state, taking into account any faults, is taken into account in the mathematical model, and hence in the determination of the reachable set as will be made clear in the following. The propulsion and steering system may include thrusters, rudders, marine vessel power plant, etc.

The mathematical model of the marine vessel may be a state-space formulation, which models both dynamics and kinematics of the marine vessel over time. The state-space formulation may be described by the ordinary differential equation

$$\dot{x}(t) = f\big(x(t), u(t), w(t)\big) \qquad\qquad (1)$$

where u is the control input, w is the disturbance, and x is the state of the marine vessel in a state space X. The control input u may include the yaw torque and total forces in surge and sway directions. The disturbance w may be due to for example wind, wave and current.

The reachable set $R_{[t_0, t_1]}$ that can be obtained by a marine vessel from an initial state $x_0$ at an initial time $t_0$, during a time range from the initial time $t_0$ to a later time $t_1$ is defined as

$$R_{[t_0, t_1]} = \{x \in X | \exists u \in U \text{ such that } x(t) \text{ is the solution of } (1)\}$$

where U is the set of admissible controls, i.e. feasible forces and torques generated by the thrusters.

An approximation of the reachable set $R_{[t0, t1]}$ can be computed via Hamilton-Jacobi-Bellman (HJB) differential game formulations. More precisely, the reachable set $R_{[t0, t1]}$ can be defined as

$$R_{[t_0, t_1]} = \{x \in X | V(t, x) \leq 0\}$$

where V(t,x) is a value function which is the viscosity solution of a partial differential equation known as the Hamilton-Jacobi-Bellman equation, shown below in equation (2)

$$\frac{\partial}{\partial t} V(t, x) + H\big(t, x, \nabla_x V(t, x)\big) = 0, t \in [t_0, t_1] \qquad\qquad (2)$$

where H is the Hamiltonian function and depends on the model of the marine vessel. The Hamiltonian H in particular depends on the state x of the marine vessel, which is the solution to equation (1).

Fig. 2 shows a flowchart of an example of a method of determining a reachable set of states of a marine vessel from an initial state $x_0$ at an initial time $t_0$, typically the current time, during a time range from the initial time $t_0$ to a later time $t_1$. The later time $t_1$ may for example be predefined or provided as an input to the marine vessel control system 1 by a user. The marine vessel control system 1 is configured to perform the method.

In a step a) the partial differential equation in equation (2) is discretized. In other words, the Hamilton-Jacobi-Bellman equation is discretized. The discretization is performed based on a subdivision of the time range from the initial time $t_0$ to a later time $t_1$.

In a step b) a minimisation problem is solved of the discretized partial different equation. By solving the minimisation problem an approximation of the value function V(t, x) of the partial differential equation in equation (2) is obtained.

The minimisation problem is a regularised optimisation problem of the form

$$minimise \ \sum_{i=1}^{N} f_i(x) + g(x) \qquad\qquad (3)$$

where $\sum_{i=1}^{N} f_i(x)$ is the discretized version of equation (2), i.e. the Hamilton-Jacobi-Bellman equation. The minimisation is performed with respect to the state x of the marine vessel. The number of subdivisions of the time range determines the number of components in the sum in equation (3), i.e. the integer N. g(x) is a regularisation term, in the art also referred to as a regularizer. The regularisation term g(x) is in the present example a function of the state x of the marine vessel. The regularisation term g(x) compensates for an error in the discretisation of the partial differential equation in equation (2). The function g(x) is defined as $\lambda||x||^2$ with a positive constant A. The value of A controls the value of approximation error. Similar to machine learning problems, values of A are tuned by cross validation.

Step b) may involve using a splitting method to decompose the minimisation problem in equation (3) into a plurality of sub-problems to obtain the approximation of the value function V(t, x). Further, each sub-problem may be solved by using a coordinate descent method. Then, depending on the type of splitting method, the solution of the whole optimization problem is a function of the solutions of all sub-problems. For example, the solution of the whole optimization problem can be an average of the solutions of the sub-problems.

In a step c) the reachable set $R_{[t0, t1]}$ of the marine vessel which can be obtained from the initial condition $x_0$ in the time range [t0, t1], i.e. from the initial time $t_0$ to the later time $t_1$ is determined based on the approximation of the value function V(t, x).

Step c) may involve finding those states x of the marine vessel for which the approximation of the value function V(t, x) is smaller than or equal to zero, i.e. according to one of the definitions of the reachable set $R_{[t0, t1]}$ previously presented herein.

The marine vessel control system 1 may be configured to enable displaying of the reachable set $R_{[t0, t1]}$ graphically. In particular, the marine vessel control system 1 may be configured to graphically display the reachable locations of the marine vessel during the time range from the initial time $t_0$ to the later time $t_1$ on a display. The captain of the marine vessel may thereby obtain good knowledge of the manoeuvring capability of the marine vessel based on its current state, such as position, speed and heading, and the available force and torque generated by the thrusters. Furthermore, the captain will thereby be able to predict the position of the marine vessel up to the later time $t_1$ in advance by considering the environmental disturbances. When the reachable locations of the reachable set do not intersect with the set of unsafe states like obstacles, the marine vessel safety can be guaranteed.

Fig. 3 schematically shows an example of a graphical representation of the reachable set $R_{[t0, t1]}$ especially with respect to the reachable locations and the current position of a marine vessel 7, at the initial time $t_0$. In the example shown Fig. 3, the reachable set $R_{[t0, t1]}$ has been determined for the marine vessel 7 five minutes ahead. The later time $t_1$ is hence five minutes from the initial time $t_0$, which is the current time. It can be seen that the marine vessel 7 can reach a point A which is within the reachable set $R_{[t0, t1]}$ while a point B is out of reach within five minutes. In case there is an obstacle at point A, the marine vessel 7 should move around point A to avoid collision.

According to one variation, the reachable set $R_{[t0, t1]}$ may be used as a dynamic constraint for controlling the course of the marine vessel 7. The marine vessel control system 1 may hence be configured to use the reachable set $R_{[t0, t1]}$ for controlling the marine vessel 7. The marine vessel control system 1 may for example be configured to use the reachable set $R_{[t0, t1]}$ together with Global Positioning System (GPS) data and/or sonar data and/or radar data obtained by the marine vessel 7 to provide safe navigation and avoid collisions.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A method of determining a reachable set ($R_{[t0, t1]}$) of states of a marine vessel (7), including a position of the marine vessel (7), that can be obtained by the marine vessel (7) from an initial state $x_0$ at an initial time $t_0$, during a time range from the initial time $t_0$ to a later time $t_1$, the method being performed by a marine vessel control system (1), wherein the method comprises:

   a) discretizing a partial differential equation which is a Hamilton-Jacobi-Bellman equation for which the Hamiltonian function is dependent on the model of the marine vessel (7), the discretizing being performed based on a subdivision of the time range,
   b) solving a minimisation problem of the discretized partial differential equation to obtain an approximation of a value function of the partial differential equation, the value function being the viscosity solution of the Hamilton-Jacobi-Bellman equation,

c) determining the reachable set ($R_{[t0, t1]}$) based on the approximation of the value function, the reachable set ($R_{[t0, t1]}$) being defined by:

$$R_{[t_0,t_1]} = \{x \in X | V(t,x) \leq 0\}$$

where V(t,x) is the value function, and

controlling the marine vessel (7) based on the reachable set ($R_{[t0, t1]}$),

wherein step b) involves using a splitting method to decompose the minimisation problem into a plurality of sub-problems to obtain the approximation of the value function.

2. The method as claimed in claim 1, wherein in step b) the solving of the minimisation problem involves finding the minimum of a sum of the discretised partial differential equation and a regularisation term which compensates for an error in the discretisation.

3. The method as claimed in claim 1 or 2, comprising solving each sub-problem using a randomised coordinate descent method.

4. The method as claimed in any of the preceding claims, wherein step c) involves finding those states of the marine vessel (7) for which the approximation of the value function is smaller than or equal to zero, said states being the reachable set.

5. The method as claimed in any of the preceding claims, comprising displaying the reachable set ($R_{[t0, t1]}$) graphically on a display.

6. The method as claimed in any of the preceding claims, wherein the reachable set ($R_{[t0, t1]}$) is used as a constraint for controlling the marine vessel (7).

7. The method as claimed in any of the preceding claims, wherein the model of the marine vessel (7) is based on a control input including yaw torque and total forces in surge and sway directions, disturbances in wind, wave and current, and marine vessel state including position of the marine vessel in a coordinate system, heading angle, surge and sway velocities, and yaw rate.

8. The method as claimed in claim 7, wherein the model of the marine vessel (7) is further based on an operational state of a steering system of the marine vessel (7).

9. A computer program comprising computer code which when executed by processing circuitry (3) of a marine vessel control system (1) causes the marine vessel control system (1) to perform the steps of any of claims 1-8.

10. A marine vessel control system (1) comprising:

processing circuitry (3), and

a storage medium (5) comprising computer code which when executed by the processing circuitry (3) causes the marine vessel control system (7) to perform the method as claimed in any of claims 1-8.

11. A marine vessel (7) comprising a marine vessel control system (1) as claimed in claim 10.

**Patentansprüche**

1. Verfahren zum Bestimmen einer erreichbaren Menge ($R_{[t0, t1]}$) von Zuständen eines Seeschiffs (7), beinhaltend eine Position des Seeschiffs (7), die vom Seeschiff (7) aus einem Anfangszustand $x_0$ zu einem Anfangszeitpunkt $t_0$ während eines Zeitbereichs vom Anfangszeitpunkt $t_0$ bis zu einem späteren Zeitpunkt $t_1$ eingenommen werden kann, wobei das Verfahren durch ein Seeschiffsteuersystem (1) durchgeführt wird, wobei das Verfahren umfasst:

a) Diskretisieren einer partiellen Differentialgleichung, bei der es sich um eine Hamilton-Jacobi-Bellman-Gleichung handelt, deren Hamilton-Funktion vom Modell des Seeschiffs (7) abhängt, wobei das Diskretisieren auf der Grundlage einer Unterteilung des Zeitbereichs durchgeführt wird,
b) Lösung eines Minimierungsproblems der diskretisierten partiellen Differentialgleichung zum Erhalten einer Approximation einer Wertfunktion der partiellen Differentialgleichung, wobei die Wertfunktion die Viskositätslösung der Hamilton-Jacobi-Bellman-Gleichung ist,
c) Bestimmen der erreichbaren Menge ($R_{[t0, t1]}$) auf der Grundlage der Approximation der Wertfunktion, wobei die erreichbare Menge ($R_{[t0, t1]}$) definiert ist durch:

$$R_{[t_0,t_1]} = \{x \in X | V(t,x) \leq 0\}$$

wobei V(t,x) die Wertfunktion ist, und
Steuern des Seeschiffs (7) auf der Grundlage der erreichbaren Menge ($R_{[t0, t1]}$),
wobei Schritt b) das Verwenden einer Aufteilungsmethode zum Zerlegen des Minimierungsproblems in eine Vielzahl von Teilproblemen beinhaltet, zu dem Zweck, die Approximation der Wertfunktion zu erhalten.

2. Verfahren nach Anspruch 1, wobei in Schritt b) das Lösen des Minimierungsproblems das Finden des Minimums einer Summe aus der diskretisierten partiellen Differentialgleichung und einem Regularisierungsterm beinhaltet, der einen Fehler in der Diskretisierung kompensiert.

3. Verfahren nach Anspruch 1 oder 2, umfassend das Lösen jedes Teilproblems unter Verwendung eines randomisierten Koordinatenabstiegsverfahrens.

4. Verfahren nach einem der vorhergehenden Ansprüche, wobei Schritt c) das Auffinden derjenigen Zustände des Seeschiffs (7) beinhaltet, für die die Approximation der Wertfunktion kleiner als oder gleich null ist, wobei die Zustände die erreichbare Menge sind.

5. Verfahren nach einem der vorhergehenden Ansprüche, umfassend das grafische Darstellen der erreichbaren Menge ($R_{[t0, t1]}$) auf einer Anzeige.

6. Verfahren nach einem der vorhergehenden Ansprüche, wobei die erreichbare Menge ($R_{[t0, t1]}$) als Beschränkung für das Steuern des Seeschiffs (7) verwendet wird

7. Verfahren nach einem der vorhergehenden Ansprüche, wobei das Modell des Seeschiffs (7) auf einer Steuereingabe basiert, beinhaltend: Giermoment und Gesamtkräfte in Schwall- und Taumelrichtung, Störungen durch Wind, Wellen und Strömung sowie den Zustand des Seeschiffs einschließlich der Position des Seeschiffs in einem Koordinatensystem, des Kurswinkels, der Schwall-und Taumelgeschwindigkeiten und der Gierrate.

8. Verfahren nach Anspruch 7, wobei das Modell des Seeschiffs (7) ferner auf einem Betriebszustand eines Rudersystems des Seeschiffs (7) basiert.

9. Computerprogramm, umfassend Computercode, der bei seiner Ausführung durch eine Verarbeitungsschaltungsanordnung (3) eines Seeschiffsteuersystems (1) das Seeschiffsteuersystem (1) veranlasst, die Schritte nach einem der Ansprüche 1 bis 8 durchzuführen.

10. Seeschiffsteuersystem (1), umfassend:

Verarbeitungsschaltungsanordnung (3), und
ein Speichermedium (5), umfassend Computercode, der bei seiner Ausführung durch die Verarbeitungsschaltungsanordnung (3) das Seeschiffsteuersystem (7) veranlasst, das Verfahren nach einem der Ansprüche 1 bis 8 durchzuführen.

11. Seeschiff (7), umfassend ein Seeschiffsteuersystem (1) nach Anspruch 10.

**Revendications**

1. Procédé de détermination d'un ensemble atteignable ($R_{[t0, t1]}$) d'états d'un navire (7), comprenant une position du navire (7), qui peut être obtenue par le navire (7) à partir d'un état initial $x_0$ à un temps initial $t_0$, pendant une plage

de temps allant du temps initial $t_0$ à un temps ultérieur $t_1$, le procédé étant mis en œuvre par un système de commande de navire (1), dans lequel le procédé comprend :

a) la discrétisation d'une équation différentielle partielle qui est une équation de Hamilton-Jacobi-Bellman pour laquelle la fonction hamiltonienne dépend du modèle du navire (7), la discrétisation étant mise en œuvre sur la base d'une subdivision de la plage de temps,

b) la résolution d'un problème de minimisation de l'équation différentielle partielle discrétisée afin d'obtenir une approximation d'une fonction de valeur de l'équation différentielle partielle, la fonction de valeur étant la solution de viscosité de l'équation de Hamilton-Jacobi-Bellman,

c) la détermination de l'ensemble atteignable ($R_{[t0,t1]}$) sur la base de l'approximation de la fonction de valeur, l'ensemble atteignable ($R_{[t0,t1]}$) étant défini par :

$$R_{[t_0,t_1]} = \{x \in X | V(t,x) \leq 0\}$$

où V(t,x) est la fonction de valeur, et

la commande du navire (7) sur la base de l'ensemble atteignable ($R_{[t0, t1]}$),

dans lequel l'étape b) consiste à utiliser un procédé de décomposition pour décomposer le problème de minimisation en une pluralité de sous-problèmes afin d'obtenir l'approximation de la fonction de valeur.

2. Procédé selon la revendication 1, dans lequel à l'étape b), la résolution du problème de minimisation consiste à trouver le minimum d'une somme de l'équation différentielle partielle discrétisée et d'un terme de régularisation qui compense une erreur affectant la discrétisation.

3. Procédé selon la revendication 1 ou 2, comprenant la résolution de chaque sous-problème à l'aide d'un procédé de descente de coordonnées randomisé.

4. Procédé selon l'une quelconque des revendications précédentes, dans lequel l'étape c) consiste à trouver les états du navire (7) pour lesquels l'approximation de la fonction de valeur est inférieure ou égale à zéro, lesdits états étant l'ensemble atteignable.

5. Procédé selon l'une quelconque des revendications précédentes, comprenant l'affichage de l'ensemble atteignable ($R_{[t0,t1]}$) graphiquement sur un dispositif d'affichage.

6. Procédé selon l'une quelconque des revendications précédentes, dans lequel l'ensemble atteignable ($R_{[t0,t1]}$) est utilisé en tant que contrainte pour commander le navire (7).

7. Procédé selon l'une quelconque des revendications précédentes, dans lequel le modèle du navire (7) est basé sur une entrée de commande comprenant le couple de lacet et la totalité des forces dans les directions d'abattage et d'embardée, les perturbations du vent, les vagues et le courant, et l'état du navire comprenant la position du navire dans un système de coordonnées, l'angle de cap, les vitesses d'abattage et d'embardée, et la vitesse de lacet.

8. Procédé selon la revendication 7, dans lequel le modèle du navire (7) est en outre basé sur un état de fonctionnement d'un système de gouverne du navire (7).

9. Programme d'ordinateur comprenant un code d'ordinateur qui, lorsqu'il est exécuté par des circuits de traitement (3) d'un système de commande de navire (1), amène le système de commande de navire (1) à mettre en œuvre les étapes selon l'une quelconque des revendications 1-8.

10. Système de commande de navire (1) comprenant :

des circuits de traitement (3), et

un support de stockage (5) comprenant un code d'ordinateur qui, lorsqu'il est exécuté par les circuits de traitement (3), amène le système de commande de navire (7) à mettre en œuvre le procédé selon l'une quelconque des revendications 1-8.

11. Navire (7) comprenant un système de commande de navire (1) selon la revendication 10.

Fig. 1

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SUDAKSHIN GANESAN.** Real Time Reachability Analysis for Marine Vessels. *degree thesis,* 2018
- **SOMIL BANSAL ; MO CHEN ; SYLVIA HERBERT ; CLAIRE J. TOMLIN.** Hamilton-Jacobi reachability: A brief overview and recent advances. *56th Annual Conference on Decision and Control, Melburne, Australia,* 15 December 2017
- **VICENC RUBIES-ROYO ; DAVID FRIDOVICH-KEIL ; SYLVIA HERBERT ; CLAIRE J TOMLIN.** A Classification-based Approach for Approximate Reachability. *International Conference on Robotics and Automation, Montreal, Canada,* 20 May 2019